# EUROPÄISCHE PATENTANMELDUNG

(11) **EP 4 531 127 A1**
(43) Veröffentlichungstag der Anmeldung: **02.04.2025**
(21) Anmeldenummer: 24199492.0
(22) Anmeldetag: 10.09.2024
(51) Int. Cl.: H01M 4/04, B29C 43/24, B29C 43/52, H01G 11/28, H01G 13/00, H01G 11/86, B29C 43/46

(54) **VORRICHTUNG UND VERFAHREN ZUM HERSTELLEN EINES TROCKENFILMS, EIN TROCKENFILM, EIN SUBSTRAT SOWIE EIN ENERGIESPEICHER- ODER ENERGIEWANDLERSYSTEM**

(30) Priorität: 28.09.2023 DE 102023126543
(71) Anmelder: Matthews International GmbH, 48691 Vreden (DE); Matthews International Corporation, Pittsburgh, Pennsylvania 15212 (US)
(72) Erfinder: HACKFORT, Thomas, 48683 Ahaus-Altstätte (DE); WOLTERS, Kay, 48703 Stadtlohn (DE); BÖING, Thorsten, 46414 Rhede (DE); KLEINGRIES, Carsten, 48691 Vreden (DE); SCHLEGEL, Ronny, 48703 Stadtlohn (DE)
(74) Vertreter: Holzwarth-Rochford, Andreas

(57) **Zusammenfassung**

Die Erfindung betrifft eine Vorrichtung (200, 300) zum Herstellen eines Trockenfilms (203, 303), umfassend eine Zuführung (204, 304) von Trockenpulver (205, 305), eine Pulvermühle (210, 310) und eine Walzenanordnung (220, 320). Dabei weist die Pulvermühle (210, 310) einen ersten Körper (101) und einen zweiten Körper (201) auf, die so angeordnet sind, dass sie einen ersten Spalt (102) zwischen dem ersten Körper (101) und dem zweiten Körper (201) bereitstellen, wobei zumindest der erste Körper (101) oder der zweite Körper (101) als ein rotierender Körper ausgeführt ist und wobei der erste Spalt (102) ausgebildet ist, das Trockenpulver (205, 305) von der Zuführung (204, 304) aufzunehmen und zu einem Trockenfilm (203, 303) zu verarbeiten. Die Walzenanordnung (220, 320) weist zumindest eine Walze (301) auf, wobei die Walzenanordnung (220, 320) ausgebildet ist, den Trockenfilm (203, 303) von der Pulvermühle (210, 310) aufzunehmen. Dabei sind die Pulvermühle (210, 310) und die Walzenanordnung (220, 320) voneinander entkoppelt.

## Beschreibung

Die Erfindung betrifft eine Vorrichtung und ein Verfahren zum Herstellen eines Trockenfilms, einen Trockenfilm, ein Substrat sowie ein Energiespeicher- oder Energiewandlersystem.

Beim Herstellen von Batterieelektroden müssen sehr dünne Schichten im Bereich von 50 bis 100 µm bei hohen Bahngeschwindigkeiten auf metallische Stromableiter, sogenannte Stromkollektoren, aufgebracht werden. Dies kann entsprechend des aktuellen Stands der Technik im Nassverfahren oder im Trockenverfahren erfolgen. Bei Nassverfahren ist dabei der Einsatz von Lösungsmitteln erforderlich, die häufig nicht vollständig ausgetragen werden, was sich nachteilig auf die Lebensdauer von Elektroden auswirken kann. Zudem erhöht sich beim Nassverfahren durch das anschließende Trocknen der Energieaufwand und der Prozess wird komplexer.

Trockenverfahren durch Verpressen von Trockenpulver in einer Pulvermühle mit zwei rotierenden Körpern, insbesondere Walzen, sind beispielsweise aus der US 7 352 558 B2, der DE 10 2017 208 220 sowie der WO 2020/148410A1 A2 bekannt. In den aktuell verwendeten Anordnungen wird der Trockenfilm in einer der Pulvermühle nachfolgenden Walzenanordnung weiter prozessiert. Eine Anzahl an Walzen in der Walzenanordnung kann dabei so angepasst werden, dass eine gewünschte Dichte und Qualität des Trockenfilms erreicht werden kann.

Diese Anordnungen weisen jedoch zwei Nachteile auf. Die Verarbeitung des Trockenpulvers im ersten Walzenspalt erfordert eine materialspezifische Temperatur, die allerdings ungünstig, insbesondere zu hoch, für eine Weiterverarbeitung des Trockenfilms sein kann. Die Walzen der Pulvermühle können für eine Verarbeitung des Trockenpulvers jedoch nicht abweichend von der materialspezifischen Temperatur temperiert werden. Somit kann erst eine erste Walze der Walzenanordnung mit einer abweichenden, insbesondere niedrigeren Temperatur beaufschlagt werden. In einem Spalt zwischen der ersten Walze der Walzenanordnung und der Pulvermühle herrscht somit aber eine für die Prozessführung nicht optimale Temperatur.

Weiterhin sind in dem Spalt zwischen den zwei rotierenden Körpern der Pulvermühle zum Verarbeiten des Trockenpulvers sehr hohe Scherkräfte erforderlich. Dies führt aber teilweise zu Vibrationen, die auch auf die nachfolgende Walzenanordnung übertragen werden können. Dies erschwert beispielsweise eine präzise Regelung von Spaltabständen und/oder kann zum Auftreten von Eigenfrequenzanregungen in der Vorrichtung führen, was zu Qualitätseinbußen im Trockenfilm und/oder zur Notabschaltung führen kann.

Es ist die Aufgabe der Erfindung, eine Vorrichtung und ein Verfahren zum Herstellen eines Trockenfilms derart weiterzuentwickeln, dass eine Prozessführung verbessert werden kann.

Diese Aufgabe wird durch eine Vorrichtung zum Herstellen eines Trockenfilms mit den Merkmalen des Anspruchs 1, ein Verfahren zum Herstellen eines Trockenfilms mit den Merkmalen des Anspruchs 30, einen Trockenfilm mit den Merkmalen des Anspruchs 35, ein Substrat mit den Merkmalen des Anspruchs 36 sowie ein Energiespeicher- oder Energiewandlersystem mit den Merkmalen des Anspruchs 37 gelöst. Vorteilhafte Ausführungsformen sind Gegenstand der jeweils abhängigen Ansprüche.

Die erfindungsgemäße Vorrichtung zum Herstellen eines Trockenfilms, vorzugsweise zum Beschichten eines Substrats, insbesondere eines Stromkollektors, umfasst eine Zuführung von Trockenpulver, eine Pulvermühle und eine Walzenanordnung. Die Pulvermühle weist einen ersten und einen zweiten Körper auf, die so angeordnet sind, dass sie einen ersten Spalt zwischen dem ersten und dem zweiten Körper bereitstellen, wobei zumindest der erste oder zweite Körper als ein rotierender Körper ausgeführt ist. Der erste Spalt ist ausgebildet, das Trockenpulver von der ersten Zuführung aufzunehmen und zu einem Trockenfilm zu verarbeiten. Die Walzenanordnung weist zumindest eine Walze auf und ist ausgebildet, den Trockenfilm von der Pulvermühle aufzunehmen. Die Pulvermühle und die Walzenanordnung sind dabei voneinander entkoppelt angeordnet.

Dadurch, dass die Pulvermühle und die Walzenanordnung voneinander entkoppelt angeordnet sind, ermöglicht die Erfindung, dass das Verarbeiten des Trockenpulvers zum Trockenfilm in der Pulvermühle das Weiterverarbeiten des Trockenfilms in der Walzenanordnung nicht nachteilig beeinflusst oder diese Beeinflussung zumindest reduziert werden kann, insbesondere gegenüber den aus dem Stand der Technik bekannten Anordnungen.

Insbesondere kann vorgesehen sein, die Pulvermühle und die Walzenanordnung mechanisch und/oder thermisch entkoppelt voneinander anzuordnen. So können zwischen der Pulvermühle und der Walzenanordnung übertragende Vibrationen vermieden oder zumindest reduziert werden, indem eine Eigensteifigkeit und damit gegebenenfalls eine Schwingungs- oder Vibrationsanregung der Pulvermühle von der Walzenanordnung separiert werden kann. Auch übertragene Wärmemengen können durch die Entkopplung vermieden oder zumindest reduziert werden. Dies ermöglicht wiederum eine Weiterverarbeitung des Trockenfilms bei einer geeigneten Prozesstemperatur und/oder das Vermeiden oder zumindest Reduzieren von Defekten im Trockenfilm infolge unerwünschter Vibrationen. Zudem kann eine Notabschaltung vermieden oder eine Häufigkeit einer Notabschaltung zumindest reduziert werden.

Als Körper wird hier ein Objekt oder Bauelement verstanden, dass geeignet ist, mit einem zweiten Körper einen Spalt bereitzustellen. Insbesondere weist der Körper hier eine Materialeigenschaft auf, die das Verarbeiten des Trockenpulvers zu dem Trockenfilm ermöglicht.

Als rotierender Körper wird hier insbesondere ein Objekt oder Bauelement verstanden, das sich um eine seiner Achsen dreht oder in einer kreisförmigen Bewegung geführt ist, dabei aber bevorzugt fest montiert oder gelagert ist, so dass es keine translatorische Bewegung ausführt, der rotierende Körper ist also ortsfest. Der rotierende Körper kann insbesondere eine Walze oder ein Band sein.

Eine Drehrichtung des zumindest einen, rotierenden Körpers kann dabei so eingestellt sein, dass eine Bewegungsrichtung einer dem ersten Spalt zugewandten Oberfläche des rotierenden Körpers mit einer Zuführungsrichtung des Trockenpulvers gleichgerichtet ist. Vorzugsweise ist der zumindest eine rotierende Körper als eine erste Walze ausgeführt.

Vorzugsweise sind die Pulvermühle und die Walzenanordnung voneinander beabstandet angeordnet. Dadurch kann sowohl ein Übertragen von Vibrationen zumindest reduziert werden, als auch ein Wärmeübergang zwischen der Pulvermühle und der Walzenanordnung verringert werden. Dadurch können Defekte im Trockenfilm verringert werden und eine für den Prozess geeignete Temperatur kann schneller im Trockenfilm eingestellt werden. Ein Abstand zwischen der Pulvermühle und der Walzenanordnung beträgt zumindest das zweifache des ersten Spalts, bevorzugt zumindest das dreifache, besonders bevorzugt zumindest das fünffache.

Die Pulvermühle und die Walzenanordnung können unabhängige Aufhängungen aufweisen. Dadurch kann insbesondere eine Übertragung von Vibrationen reduziert werden. Als Aufhängungen werden hier allgemein Befestigungen und/oder Lagerungen verstanden. Wenn die Pulvermühle und die Walzenanordnung unabhängig voneinander aufgehängt sind, ist eine Übertragung von Vibrationen sehr unwahrscheinlich, da sie baulich entkoppelt sind. Zusätzlich oder alternativ kann vorgesehen sein, dass ein Boden oder eine Wand dämpfende Eigenschaften und/oder dämpfende Elemente aufweist, um eine Übertragung von Vibrationen weiter zu reduzieren.

Vorzugsweise ist die Pulvermühle über der Walzenanordnung angeordnet. Dadurch kann der in der Pulvermühle hergestellte Trockenfilm schwerkraftgetrieben der Walzenanordnung zur weiteren Verarbeitung zugeführt werden. Insbesondere kann die Pulvermühle gegenüber der Walzenanordnung verstellbar ausgeführt sein. Das Verstellen der Pulvermühle gegenüber der Walzenanordnung kann dabei translatorisch und/oder rotatorisch erfolgen. Bevorzugt ist die Pulvermühle so gegenüber der Walzenanordnung verstellbar, dass eine Position, an der der Trockenfilm die Walzenanordnung kontaktiert, einstellbar ist. Dadurch ermöglicht die Erfindung, dass eine Verweilzeit des Trockenfilms auf der zumindest einen Walze der Walzenanordnung einstellbar ist und damit eine eingetragene Wärmemenge in den Trockenfilm steuerbar ist. Temperaturschwankungen bei der Herstellung des Trockenfilms lassen sich so nachregeln und eine gleichbleibende Filmqualität kann erreicht werden.

Wenn eine translatorische und eine rotatorische Verstellung der Pulvermühle gegenüber der Walzenanordnung vorgesehen ist, kann eine Länge des Trockenfilms zwischen der Pulvermühle und einem Kontaktpunkt auf der zumindest einen Walze der Walzenanordnung bei einer Verstellung der Pulvermühle konstant gehalten oder bedarfsgerecht variiert werden. Auch ermöglicht die Erfindung so, wenn beispielsweise eine höhere Produktionsgeschwindigkeit erforderlich ist und somit eine Rotationsgeschwindigkeit des zumindest einen rotierenden Körpers der Pulvermühle und/oder der zumindest einen Walze der Walzenanordnung erhöht ist, eine Verweilzeit des Trockenfilms auf der zumindest einen Walze der Walzenanordnung durch Verstellen der Pulvermühle gegenüber der Walzenanordnung anzupassen.

Dabei kann auch vorgesehen sein, dass die Pulvermühle gegenüber der Walzenanordnung so verstellbar ist, dass eine maximale Umschlingungsrate des Trockenfilms um den ersten rotierenden Körper der Pulvermühle und/oder die zumindest eine Walze der Walzenanordnung mehr als 10 %, bevorzugt mehr als 25 %, besonders bevorzugt mehr als 50 % beträgt. Somit kann eine Temperierung des Trockenfilms weiter beeinflusst werden. Denn eine höhere Umschlingungsrate führt zu einer größeren Fläche, über die Wärme übertragen werden kann. Insbesondere ermöglicht eine Umschlingung des oberen Umfangteiles der zumindest einen, bevorzugt beheizbaren, Walze der Walzenanordnung eine einstellbare Temperaturvorheizung des Trockenfilms, die beispielsweise an eine Produktionsgeschwindigkeit anpassbar ist. Umschlingungsrate bezeichnet hier den Anteil der Oberfläche, insbesondere der Mantelfläche, des ersten rotierenden Körpers oder der zumindest einen Walze der Walzenanordnung, der mit dem Trockenfilm kontaktiert.

Der erste oder der zweite Körper der Pulvermühle kann auch als ein feststehender Körper ausgeführt ist. Eine Ausführung als feststehender Körper ermöglicht einen verringerten, technischen Aufwand, da eine Lagerung entfallen kann und auch kein Antrieb erforderlich ist. Auch kann eine Rotationsgeschwindigkeit des zumindest einen, rotierenden Körpers gegenüber einer Pulvermühle mit zwei Walzen kleiner gewählt werden, was eine Antriebsleistung verringern kann. Denn eine Rotationsgeschwindigkeit des zumindest einen rotierenden Körpers ist zwingend immer größer als eine Rotationsgeschwindigkeit des feststehenden Körpers und für die Filmbildung ist der relative Geschwindigkeitsunterschied zwischen dem feststehenden Körper und dem zumindest einen rotierenden Körper wesentlich.

Als feststehender Körper wird hier ein Objekt oder Bauelement verstanden, das bewegungsfrei montiert oder aufgestellt ist. Unter bewegungsfrei wird insbesondere verstanden, dass der feststehende Körper keine regelmäßige und/oder kontinuierliche Bewegung, insbesondere Rotation, ausführt. Der feststehende Körper kann insbesondere eine Wand, ein Abschnitt einer Wand oder an einer Wand angebracht sein.

Vorzugsweise weist der feststehende Körper zumindest eine gerade Oberfläche auf und der erste Spalt ist zwischen der zumindest einen geraden Oberfläche und dem ersten, rotierenden Körper bereitgestellt. So ermöglicht die Erfindung eine ausreichende Kontaktfläche zur Filmbildung.

Vorzugsweise ist die Zuführung in dem feststehenden Körper aufgenommen oder ausgebildet. Dadurch ermöglicht die Erfindung eine sehr effiziente Nutzung von zur Verfügung stehendem Bauraum. Die erste Zuführung kann dabei als Trichter ausgeführt sein.

Weiter kann ein Profil einer dem ersten Spalt zugewandten Oberfläche des feststehenden Körpers zumindest bereichsweise veränderbar ist. Diese Ausführung ermöglicht es, eine Trockenfilmbildung während eines laufenden Herstellungsprozesses zu beeinflussen. Soll beispielsweise ein Trockenfilm ein bestimmtes Materialprofil aufweisen, kann das Profil einer Oberfläche des feststehenden Köpers entsprechend angepasst werden. Bevorzugt umfasst die Vorrichtung Mittel zur Messung eines Profils des Trockenfilms. Basierend auf der Messung kann das Profil der Oberfläche des feststehenden Köpers dann angepasst werden, um das Profil des Trockenfilms zu korrigieren. Das veränderliche Profil einer Oberfläche des feststehenden Körpers kann also vorteilhaft in einem geschlossenen Regelkreis eingesetzt werden.

Zur bereichsweisen Veränderung des Profils der Oberfläche des feststehenden Körpers kann der feststehende Körper zumindest ein Stellelement umfassen. Bevorzugt ist das zumindest eine Stellelement als ein Zylinder ausgeführt. Das bereichsweise Verändern des Profils der Oberfläche des feststehenden Körpers kann dabei eine Roll-Bending Einheit an dem zumindest einen rotierenden Körper oder in der Walzenanordnung ersetzen und ist wesentlich einfacher zu kontrollieren.

Der erste und/oder der zweite Körper der Pulvermühle kann auch als ein Band ausgeführt ist. Dadurch kann eine Führung des Trockenpulvers vereinfacht werden. Das Band kann dabei über zumindest zwei Führungsrollen geführt sein. Bevorzugt ist das Band über drei Führungsrollen geführt, um eine ausreichende Spannung des Bands bereitzustellen. Dabei kann die Vorrichtung auch ein Gegendruckelement umfassen, das in einem Bereich des ersten Spalts auf einer von dem ersten Spalt abgewandten Seite des Bands angeordnet ist. Das Gegendruckelement ist ausgebildet, eine ausreichende Spannung des Bands bereitzustellen, um das Trockenpulver zu dem Trockenfilm in dem ersten Spalt verarbeiten zu können.

Der Trockenfilm kann vor der Aufnahme durch die Walzenanordnung freitragend sein. Dadurch ist ein Bedarf an Umlenk- oder Tänzerwalzen reduziert oder ganz überflüssig.

Vorzugsweise sind die Pulvermühle und die Walzenanordnung unabhängig voneinander temperierbar. So kann eine Temperatur in der Pulvermühle für ein Verarbeiten des Trockenfilms angepasst sein, eine Temperatur in der Walzenanordnung kann hingegen für die Weiterverarbeitung angepasst sein.

Auch können Temperaturen einzelner, rotierender Körper steuerbar sein, indem Temperiervorrichtungen vorgesehen werden. Beispielsweise können in einigen Ausführungsformen eine letzte Walze oder die letzten Walzen der Walzenanordnung temperaturgesteuert werden, um eine Laminierung des Trockenfilms auf einen Stromkollektor zu unterstützen.

Vorzugsweise sind der erste und/oder der zweite Körper der Pulvermühle und/oder die zumindest eine Walze der Walzenanordnung verstellbar ausgeführt. Dadurch ermöglicht die Erfindung, dass eine Breite des ersten Spalts oder nachfolgender Walzenspalte in der Walzenanordnung angepasst werden können, um beispielsweise Trockenfilme unterschiedlicher Dicke herstellen zu können. Auch kann so auf während der Herstellung gemessene Dicken des Trockenfilms durch ein Verstellen reagiert werden, um einen Trockenfilm mit einer gewünschten Dicke zu erhalten.

Weiterhin kann vorgesehen sein, dass eine Rotationsgeschwindigkeit des zumindest einen rotierenden Körpers der Pulvermühle und/oder eine Rotationsgeschwindigkeit der zumindest einen Walze der Walzenanordnung einstellbar ist. Dadurch kann eine Scherung innerhalb des Trockenfilms beeinflusst werden sowie eine Dichte, eine Dicke oder eine Porosität des Trockenfilms durch eine mögliche Streckung des Materials angepasst werden. Auch kann so eine Haftung des Trockenfilms an einer nachfolgenden Walze oder rotierendem Körper verbessert werden, um einen Weitertransport des Trockenfilms zu vereinfachen, insbesondere indem eine Rotationsgeschwindigkeit einer nachgelagerten Walze größer ist als die einer vorgelagerten Walze.

Vorzugsweise weist die Vorrichtung zumindest einen Temperatursensor auf, der ausgebildet ist, eine Temperatur des Trockenfilms zu erfassen, bevorzugt in einem Bereich zwischen der Pulvermühle und der Walzenanordnung, bevorzugt in einem Bereich unmittelbar vor der Walzenanordnung. Dadurch kann eine Temperatur des Trockenfilms unmittelbar vor Eintritt in die Walzenanordnung erfasst werden. Bevorzugt kann basierend auf dieser erfassten Temperatur dann eine Temperierung der Walzenanordnung angepasst werden. Unmittelbar wird hier so verstanden, dass der Temperatursensor die Temperatur in einem Bereich erfasst, der von der Walzenanordnung maximal um das zehnfache der Breite des ersten Spalts, bevorzugt maximal das Fünffache, besonders bevorzugt maximal das Zweifache, beabstandet ist.

Weiterhin kann die Vorrichtung zumindest einen Sensor zum Erfassen einer Güte und/oder einer Dicke des Trockenfilms aufweisen, vorzugsweise in einem Bereich zwischen der Pulvermühle und der Walzenanordnung. Dies kann beispielsweise die Detektion einer Dichte, einer Porosität, von Agglomeraten, harten Fremdpartikeln oder Pulververhärtungen umfassen. Solche Partikel oder Agglomerate können zu einer Beschädigung der Walzenanordnung führen und sind in einem anliegenden Trockenfilm nicht zu detektieren. Messungen im Bereich zwischen der Pulvermühle und der Walzenanordnung, wenn der Trockenfilm also gerade nicht an einer Walze oder einem Körper der Pulvermühle anliegt, ermöglichen es hingegen, diese Partikel oder Agglomerate zu erkennen. Bevorzugt kann es vorgesehen sein, bei Detektion eines solchen Defekts, den Prozess zu stoppen oder einen Walzenspalt in der Walzenanordnung zu öffnen. Damit lassen sich Walzenbeschädigungen und kostspielige Walzenwechsel zu vermeiden.

Vorzugsweise umfasst die Walzenanordnung zumindest eine weitere, nachgelagerte Walze und die zumindest zwei Walzen sind so angeordnet, dass sie einen ersten Walzenspalt der Walzenanordnung zwischen den zumindest zwei Walzen bereitstellen, wobei der erste Walzenspalt der Walzenanordnung ausgebildet ist, den Trockenfilm von der vorgelagerten Walze der Walzenanordnung aufzunehmen. Dadurch ermöglicht die Walzenanordnung eine Weiterbehandlung des Trockenfilms, beispielsweise um einen Trockenfilm mit einer gewünschten Dichte oder Dicke herzustellen.

Vorgelagert wird hier im Sinne der Transportrichtung des Trockenfilms verstanden, so dass beispielsweise die Pulvermühle der Walzenanordnung vorgelagert ist. Denn die Walzenanordnung nimmt den Trockenfilm von der Pulvermühle auf. Entsprechend ist die zumindest eine Walze, die den Trockenfilm an die weitere Walze der Walzenanordnung übergibt, der weiteren Walze vorgelagert. So wird hier auch der Begriff "nachgelagert" verstanden.

Vorzugsweise ist ein Durchmesser der vorgelagerten Walze der Walzenanordnung größer als ein Durchmesser der nachgelagerten Walze. Mit dem größeren Durchmesser der vorgelagerten Walze kann bei gleicher Oberflächengeschwindigkeit die Verweilzeit des Trockenfilms verlängern werden.

Vorzugsweise weist die Vorrichtung eine Bereitstellungseinheit eines Substrats, insbesondere eines Stromkollektors auf. Die Bereitstellungseinheit ist dabei ausgebildet, das Substrat dem ersten Walzenspalt oder einem weiteren Walzenspalt zuzuführen, und der erste oder der weitere Walzenspalt ist ausgebildet, das Substrat aufzunehmen und den Trockenfilm auf das Substrat aufzubringen. Insbesondere kann die Bereitstellungseinheit ausgebildet sein, das Substrat einem letzten Spalt der Walzenanordnung zuzuführen. Der Vorteil, den Trockenfilm erst in einem letzten Spalt der Walzenanordnung auf das Substrat aufzubringen, besteht darin, dass der Trockenfilm üblicherweise erst am Ende der Walzenanordnung die gewünschten Eigenschaften, beispielsweise hinsichtlich Dichte, Dicke, Porosität und/oder Festigkeit aufweist.

Dadurch, dass die Vorrichtung die Bereitstellungseinheit aufweist, ermöglicht die Erfindung, dass der Trockenfilm direkt auf das Substrat, beispielsweise eine Metallfolie für einen Stromkollektor, laminiert werden kann, ohne dass der Trockenfilm zuerst entfernt und zu einer separaten Maschine transportiert werden muss. Somit kann dieselbe Vorrichtung eine direkte Laminierung von Elektrodenschichten auf einen Stromkollektor durchführen, um eine Elektrode zu bilden.

Bei der laminierten Elektrode kann es sich sowohl um eine durchgehende Bahn als auch um intermittierende Elektrodenkonstruktionen handeln. Das verwendete Substrat kann mit einem Klebstoff vorbeschichtet sein, oder ein Klebstoff kann über einen separaten Pulverbehälter auf eine Seite des Substrats aufgetragen werden, wodurch eine direkte Laminierung des Substrats ermöglicht wird. Nach dem Laminieren kann ein Rollenschneider vorgesehen sein, um das laminierte Substrat auf eine endgültige Elektrodenbreite zu schneiden und einzelne Elektrodenrollen aufzuwickeln.

Das Trockenpulver kann ein Aktivmaterial, ein Leitadditiv und/oder einen geeigneten Binder umfasst. Gegenüber in Nassverfahren eingesetzten Verfahren können insbesondere auch Materialien eingesetzt werden, die feuchtigkeitsempfindlich sind. Beispielsweise kann ein Trockenpulver eingesetzt werden, das Polytetrafluorethylen, ein Leitadditiv, beispielsweise Kohlenstoffnanoröhren, porösen Kohlenstoff, ein Übergangsmetalloxid und bzw. oder Schwefel enthält bzw. aufweist. Für eine Kohlenstoff/Schwefel-Kathode kann die Trockenpulvermischung porösen Kohlenstoff, beispielsweise porösen Ruß, Graphen und/oder Kohlenstoffnanoröhren, Schwefel, Polytetrafluorethylen und gegebenenfalls ein weiteres Leitadditiv aufweisen. Für eine Lithium-Ionen-Elektrode kann neben Polytetrafluorethylen und einem zusätzlichen Leitadditiv noch ein Aktivmaterial, vorzugsweise Lithium-Eisenphosphat (LFP), Lithiummanganoxid (LMO), Nickel-Mangan-Cobalt (NMC), nickelreiches Lithium-Nickel-Mangan-Cobaltoxid (NMC 622 oder NMC 811), Lithium-Nickel-Cobalt-Aluminiumoxid (NCA), Lithium-Cobalt-Oxid (LCO), Lithium-Mangan-Nickeloxid (LMNO) und bzw. oder Lithiumtitanat (LTO) verwendet werden.

Vorzugsweise umfasst die Vorrichtung ein Steuergerät, das ausgebildet und eingerichtet ist, eine Rotationsgeschwindigkeit des zumindest einen rotierenden Körpers der Pulvermühle und/oder der zumindest einen Walze der Walzenanordnung einzustellen. Das Steuergerät kann weiterhin ausgebildet und eingerichtet sein, eine Temperatur des ersten und/oder des zweiten Körpers der Pulvermühle und/oder der zumindest einen Walze der Walzenanordnung einzustellen und/oder die Pulvermühle gegenüber der Walzenordnung, den ersten und/oder den zweiten Körper der Pulvermühle und/oder die zumindest eine Walze der Walzenanordnung zu verstellen.

Bevorzugt ist das Steuergerät ausgebildet und eingerichtet, die erfasste Temperatur, Güte und/oder Dicke des Trockenfilms von dem Sensor zu erhalten und basierend auf der erhaltenen Information eine Rotationsgeschwindigkeit des zumindest einen rotierenden Körpers der Pulvermühle und/oder der zumindest einen Walze der Walzenanordnung einzustellen, eine Temperatur des ersten und/oder des zweiten Körpers der Pulvermühle und/oder der zumindest einen Walze der Walzenanordnung einzustellen und/oder die Pulvermühle gegenüber der Walzenordnung, den ersten und/oder den zweiten Körper der Pulvermühle und/oder die zumindest eine Walze der Walzenanordnung zu verstellen.

So kann beispielsweise vorgesehen sein, dass der Temperatursensor eine Trockenfilmtemperatur unmittelbar vor der Walzenanordnung misst, das Steuergerät die gemessene Temperatur von dem Temperatursensor erhält und basierend auf der gemessenen Temperatur durch Verstellen der Pulvermühle gegenüber der Walzenanordnung eine Verweilzeit des Films auf der zumindest einen Walze der Walzenanordnung aktiv steuert. Damit lässt sich in nahezu Echtzeit die Trockenfilmtemperatur einstellen und/oder korrigieren, ohne eine Walzentemperatur zu verändern. Gegenüber einer Änderung der Walzentemperatur besteht hierbei auch der Vorteil, dass die Anpassung schneller erfolgen kann, denn insbesondere ein Senken einer Walzentemperatur ist mit einer zeitlichen Verzögerung verbunden.

Alternativ oder ergänzend kann vorgesehen sein, dass das Steuergerät ausgebildet und eingerichtet ist, Messdaten von dem Sensor zum Erfassen einer Güte des Trockenfilms zu erhalten, basierend auf den Messdaten einen Defekt zu identifizieren und bei Identifikation eines Defekts, die Walzenanordnung zu stoppen oder zumindest einen Walzenspalt zu öffnen, beispielsweise durch Verstellen der zumindest einen Walze der Walzenanordnung. Damit lassen sich Walzenbeschädigungen und kostspielige Walzenwechsel vermeiden oder eine Häufigkeit zumindest reduzieren.

Weitere Ausführungsformen der Vorrichtung können zusätzliche Eigenschaften aufweisen. So kann beispielsweise eine zweite Zuführung von Trockenpulver vorgesehen sein, die ein Trockenpulver mit einer identischen oder abweichenden Zusammensetzung der Vorrichtung zuführt. Die Zuführung kann dabei ebenfalls im ersten Spalt erfolgen oder an einer nachgelagerten Position. Dadurch kann ein Trockenfilm hergestellt werden, der unterschiedliche Eigenschaften auf den gegenüberliegenden Seiten aufweist, wenn das Trockenpulver der zweiten Zuführung eine andere Zusammensetzung aufweist als das Trockenpulver der ersten Zuführung.

Weiterhin kann vorgesehen sein, eine gespiegelte Anordnung vorzusehen. Dies bedeutet, dass beispielsweise zwei Trockenfilme in separaten Vorrichtungen, jeweils eine Pulvermühle und eine Walzenanordnung umfassend, hergestellt werden. Weiterhin kann eine solche Vorrichtung mit gespiegelter Anordnung eine Zuführung eines Substrats aufweisen, vorzugsweise eines Stromkollektors, wobei die Zuführung ausgebildet ist, das Substrat einem Spalt einer Laminierungseinheit zuzuführen, und wobei der Spalt der Laminierungseinheit ausgebildet ist, das Substrat aufzunehmen und die beiden Trockenfilme der gespiegelten Anordnung auf das Substrat aufzubringen.

So ermöglicht die Erfindung das parallele Herstellen zweier Trockenfilme. Weiterhin können die beiden Trockenfilme direkt auf das Substrat, beispielsweise eine Metallfolie für einen Stromkollektor, laminiert werden, ohne dass die beiden Trockenfilme zuerst entfernt und zu einer separaten Maschine transportiert werden müssen. Somit kann dieselbe Vorrichtung eine direkte Laminierung von einseitigen oder doppelseitigen Elektrodenschichten auf einen Stromkollektor durchführen, um eine ein- oder doppelseitige Elektrode zu bilden.

Jeder rotierende Körper, beispielsweise Walze oder Band, kann einzeln beispielsweise über einen Motor und Zahnradantrieb antreibbar und individuell adressierbar sein. Das Steuergerät kann dabei ausgebildet und eingerichtet sein, die einzelnen Rotationsgeschwindigkeiten zu steuern oder zu regeln. Auch können die Spaltabstände zwischen den einzelnen, rotierenden Körpern, auch zu einem feststehenden Körper der Pulvermühle steuer- oder regelbar ausgeführt sein.

Ein weiterer Aspekt der Erfindung betrifft ein Verfahren zum Herstellen eines Trockenfilms, vorzugsweise zum Beschichten eines Substrats, insbesondere eines Stromkollektors, bei dem ein Trockenpulver durch eine Vorrichtung aufweisend eine Pulvermühle und eine Walzenanordnung, vorzugsweise durch eine erfindungsgemäße Vorrichtung, zu dem Trockenfilm verarbeitet wird, aufweisend die Schritte:
- Bereitstellen eines Trockenpulvers, und
- Verarbeiten des Trockenpulvers in der Vorrichtung zu dem Trockenfilm,
wobei die Pulvermühle und die Walzenanordnung voneinander entkoppelt, vorzugsweise mechanisch und/oder thermisch entkoppelt, angeordnet sind.

Das Verfahren ermöglicht ein vorteilhaftes Herstellen eines Trockenfilms, da durch die entkoppelte Anordnung von Pulvermühle und Walzenanordnung Defekte in dem Trockenfilm vermieden oder zumindest reduziert werden können und weiterhin eine für eine Prozessführung geeignete Temperatur in dem Trockenfilm vorteilhaft bereitgestellt werden kann.

Das Verfahren kann vorzugsweise die Schritte eines Bereitstellens eines Substrats und eines Aufbringens des Trockenfilms auf das Substrat umfassen. Dadurch ermöglicht das Verfahren ein Herstellen einer Elektrode durch Laminieren des Trockenfilms auf das Substrat.

Vorzugsweise kann das Verfahren in einem weiteren Schritt ein Verstellen der Pulvermühle gegenüber der Walzenanordnung umfassen. Dadurch kann beispielsweise eine Verweilzeit des Trockenfilms auf zumindest einer Walze der Walzenanordnung eingestellt werden und/oder eine Umschlingungsrate des Trockenfilms um die zumindest eine Walze oder einen rotierenden Köper der Pulvermühle angepasst werden. So kann ein Wärmeeintrag von der zumindest einen Walze der Walzenanordnung oder von dem rotierenden Körper der Pulvermühle in den Trockenfilm gesteuert werden.

Bevorzugt basiert der Schritt des Verstellens auf einer erfassten Temperatur, Güte und/oder Dicke des Trockenfilms. So wird ermöglicht, das Verfahren in einem geschlossenen Regelkreis auszuführen. Insbesondere kann so im laufenden Betrieb ein Durchführen des Verfahrens angepasst werden, so dass eine Menge an hergestelltem Trockenfilm mit unerwünschten Eigenschaften zumindest reduziert werden kann.

Die Erfindung ist weiterhin auf einen Trockenfilm gerichtet, der durch eine erfindungsgemäße Vorrichtung bereitgestellt und/oder durch ein erfindungsgemäßes Verfahren hergestellt ist. Dieser kann infolge der Entkopplung von Pulvermühle und Walzenanordnung verbesserte Materialeigenschaften gegenüber Trockenfilmen aus dem Stand der Technik aufweisen, bei denen eine Trockenfilmtemperatur für eine Prozessierung des Trockenfilms in der Walzenanordnung nicht optimal ist und/oder durch von der Pulvermühle auf die Walzenanordnung übertragene Vibrationen Defekte im Trockenfilm hervorgerufen werden. Insbesondere kann der Trockenfilm so eine gewünschte Dichte, Dicke oder Porosität aufweisen. Der Trockenfilm kann dabei eine Dicke kleiner 500 µm, bevorzugt kleiner 250 µm, besonders bevorzugt kleiner 150 µm aufweisen.

Die Erfindung betrifft weiterhin ein Substrat, vorzugsweise einen Stromkollektor, mit einem erfindungsgemäßen Trockenfilm.

Das Substrat kann dabei aus einem metallischen Werkstoff gebildet sein beziehungsweise diesen umfassen. Insbesondere kann es eine Metallfolie sein, die beispielsweise Aluminium oder Kupfer umfasst.

Ein weiterer Aspekt der Erfindung betrifft ein Energiespeicher- oder Energiewandlersystem, das einen erfindungsgemäßen Trockenfilm aufweist.

Ein Energiespeicher- oder wandlersystem kann ein Kondensator, ein Lithium-Ionen-Kondensator (LIC), ein Ultrakondensator, eine Batterie wie etwa eine Lithium-Ionen-Batterie oder ein Hybrid-Energiespeichergerät sein, das Aspekte von zwei oder mehr der Vorstehenden kombiniert.

Weitere Einzelheiten der Erfindung werden anhand der nachstehenden Figuren erläutert. Dabei zeigt:
- Figur 1: eine seitliche schematische Ansicht einer Vorrichtung zur Herstellung eines Trockenfilms aus dem Stand der Technik;
- Figur 2: eine Ausführung einer erfindungsgemäßen Vorrichtung zum Herstellen eines Trockenfilms mit einer gegenüber einer Walzenanordnung translatorisch verstellbaren Pulvermühle;
- Figur 3: eine weitere Ausführungsform einer erfindungsgemäßen Vorrichtung zum Herstellen eines Trockenfilms mit einer gegenüber einer Walzenanordnung translatorisch verstellbaren Pulvermühle;
- Figur 4: eine Ausführungsform einer erfindungsgemäßen Vorrichtung zum Herstellen eines Trockenfilms mit einer gegenüber einer Walzenanordnung translatorisch und rotatorisch verstellbaren Pulvermühle; und
- Figur 5: eine weitere Ausführungsform einer erfindungsgemäßen Vorrichtung zum Herstellen eines Trockenfilms mit einer gegenüber einer Walzenanordnung translatorisch und rotatorisch verstellbaren Pulvermühle.

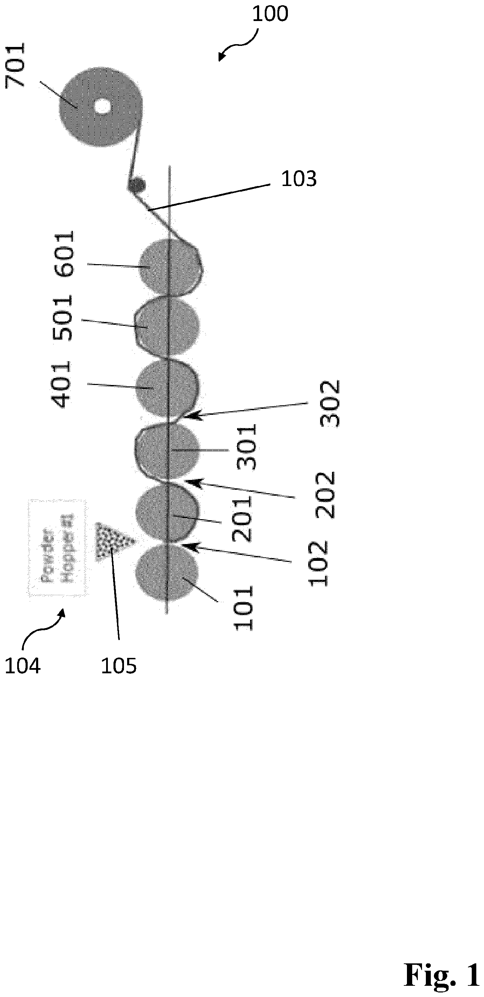

Figur 1 zeigt schematisch eine Vorrichtung 100 zum Herstellen eines Trockenfilms gemäß dem Stand der Technik. Die Vorrichtung 100 weist insgesamt sechs Walzen 101, 201, 301, 401, 501 und 601 auf, wobei jeweils zwei Walzen einen Spalt zwischen sich bereitstellen. Der erste Spalt 102, der von der ersten Walze 101 und der zweiten Walze 201 bereitgestellt ist, ist dabei ausgebildet ein von einer Zuführung 104 bereitgestelltes Trockenpulver 105 zu einem Trockenfilm 103 zu verarbeiten. In nachfolgenden Spalten, beispielsweise den Spalten 202 und 302, wird der Trockenfilm 103 weiter prozessiert. Wenn er eine finale Dichte und Qualität erreicht hat, wird der Trockenfilm 103 hier auf einem Aufwickler 701 gesammelt. Weitere Details zu der Vorrichtung 100 können der WO 2020/148410 A2 entnommen werden.

Die Vorrichtung gemäß Fig. 1 weist jedoch zwei Nachteile auf. Das Verarbeiten des Trockenpulvers 105 zum Trockenfilm 103 im ersten Walzenspalt 102 benötigt eine materialspezifische Temperatur zur Prozessierung des Trockenpulvers 105. Diese Temperatur muss aber nicht ideal für die Weiterverarbeitung des Trockenfilms 103 sein. Da aber die Walzen 101 und 201 auf die Prozesstemperatur für die Herstellung des Trockenfilms 103 gehalten werden müssen, kann frühestens Walze 301 mit einer niedrigeren Temperatur gefahren werden. Im Spalt 202 liegen somit für eine Prozessführung keine optimalen Bedingungen vor.

Weiterhin müssen zur Verarbeitung des Trockenpulvers 105 zum Trockenfilm 103 in dem Spalt 102 sehr hohe Scherkräfte aufgebracht werden. Dies führt zum Teil zu Vibrationen, die aufgrund der nacheinander geschalteten Walzen 101, 201,301,401,501, 601 in die gesamte Vorrichtung 100 übertragen werden können. Dies kann auch eine Spaltregelung, insbesondere ein genaues Einstellen der Spaltabstände, erschweren. Die Folge sind Eigenfrequenzanregungen in der Vorrichtung 100, die bis zur Notabschaltung führen können

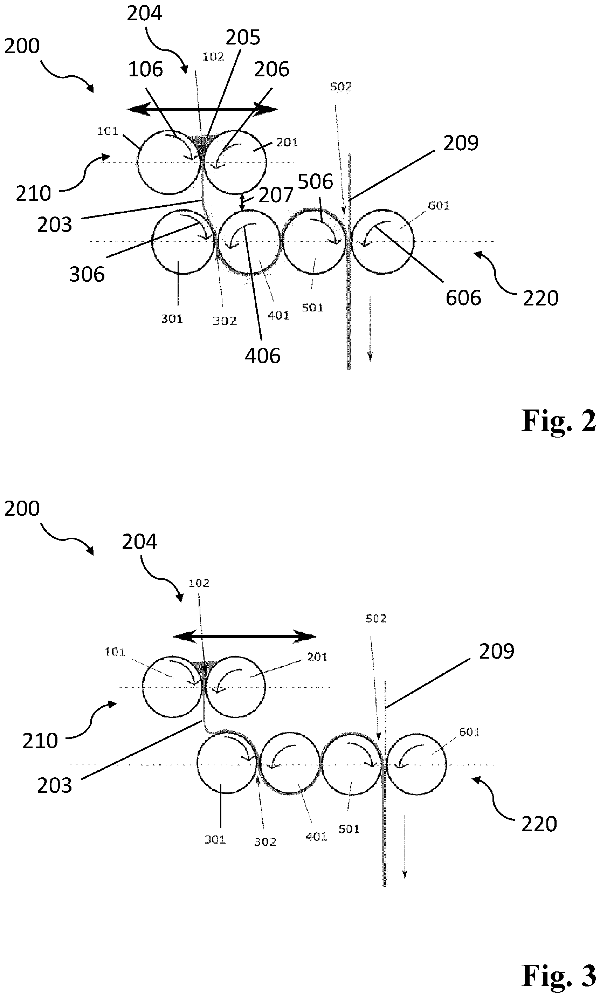

Daher besteht ein Bedarf, eine Vorrichtung zur Herstellung von Trockenfilmen bereitzustellen, die eine verbesserte Prozessführung ermöglicht. Figur 2 zeigt Vorrichtung 200 zum Herstellen eines Trockenfilms 203, hier zum Beschichten eines Substrats 209, insbesondere eines Stromkollektors, umfassend:
- eine Zuführung 204 von Trockenpulver 205,
- eine Pulvermühle 210 aufweisend einen ersten, als erste Walze 101 ausgeführten Körper und einen zweiten, als zweite Walze 201 ausgeführten Körper, die so angeordnet sind, dass sie einen ersten Spalt 102 zwischen der ersten Walze 101 und der zweiten Walze 201 bereitstellen, wobei der erste Spalt 102 ausgebildet ist, das Trockenpulver 205 von der Zuführung 204 aufzunehmen und zu einem Trockenfilm 203 zu verarbeiten, und
- eine Walzenanordnung 220, aufweisend eine dritte Walze 301 und nachfolgende Walzen 401, 501, 601, wobei die Walzenanordnung 220 ausgebildet ist, den Trockenfilm 203 von der Pulvermühle 210 aufzunehmen.

Die Pulvermühle 210 und die Walzenanordnung 220 sind dabei voneinander entkoppelt angeordnet. Das Entkoppeln wird dadurch erreicht, dass die Walzen 101, 201 der Pulvermühle 210 von der Walzenanordnung 220 gelöst sind, also beispielsweise unabhängige Aufhängungen aufweisen. Dadurch ist eine Vibrationsanregung zumindest reduziert, da die Pulvermühle 210 und die Walzenanordnung 220 nicht durch eine gemeinsame Haltevorrichtung mechanisch gekoppelt sind.

Weiterhin kann so eine Wärmeübertragung zwischen Pulvermühle 210 und Walzenanordnung 220 reduziert werden. Wie in Fig. 2 erkennbar, sind die Walzen 101, 201 der Pulvermühle 210 hierzu von der Walzenanordnung 220 beabstandet angeordnet. Dieser Abstand 207 zwischen der Pulvermühle 210 und der Walzenanordnung 220 beträgt hier zumindest das zweifache des ersten Spalts 102, kann aber auch größer gewählt werden. Die Pulvermühle 210 und die Walzenanordnung 220 sind somit mechanisch und thermisch voneinander entkoppelt.

Die Pulvermühle 210 ist hier über der dritten Walze 301 positioniert. Dadurch kann mit den beiden Walzen 101, 201 der Pulvermühle 210 ein freitragender Film hergestellt werden, der auf die dritte Walze 301 geführt wird. Zusätzlich zur Entkopplung kann die Pulvermühle 210 frei über die Walze 301 bewegt werden, hier translatorisch. Mit dieser translatorischen Verstellung lässt sich eine Verweilzeit des Trockenfilms 203 auf der Walze 301 einstellen und damit die eingetragene Wärmemenge in den Trockenfilm.

Temperaturschwankungen bei der Herstellung des Trockenfilms lassen sich so nachregeln und eine gleichbleibende Filmqualität kann erreicht werden.

Zudem ermöglicht diese Anordnung eine optimale Prozessführung hinsichtlich Temperatur, Geschwindigkeit und/oder Materialdichte für die Herstellung des Trockenfilms 203. Insbesondere kann die Pulvermühle 210 so gegenüber der Walzenanordnung 220 translatorisch verstellbar ausgeführt sein, dass eine Position, an der der Trockenfilm 203 die Walzenanordnung 220 kontaktiert, einstellbar ist. Bei höherer Produktionsgeschwindigkeit und somit größerer Oberflächengeschwindigkeit der Walze 301 kann beispielsweise die Verweilzeit des Trockenfilms 203 auf Walze 301 durch ein Verstellen der Pulvermühle 210 verlängert werden, so dass ein Wärmeeintrag weitgehend konstant bleiben kann.

Dies ist in Fig. 3 gezeigt, in der die Pulvermühle 210 der Vorrichtung 100 so translatorisch verstellt ist, dass der Trockenfilm 203 die Walze 301 der Walzenanordnung 220 an einer anderen Position kontaktiert. Dadurch ist eine Kontaktfläche zwischen Trockenfilm 203 und Walze 301 in der in Fig. 3 gezeigten Anordnung größer als in der in Fig. 2 gezeigten Anordnung. Dies entspricht einer erhöhten Umschlingungsrate, da der Trockenfilm 203 in Fig. 3 die Walze 301 stärker umschlingt als in Fig. 2. In der in Fig. 3 gezeigten Anordnung findet somit ein größerer Wärmeeintrag von der Walze 301 in den Trockenfilm 203 statt als in der in Fig. 2 gezeigten Anordnung. Durch die translatorische Verstellung der Pulvermühle 210 kann die Temperierung des Trockenfilms 203 also unmittelbar beeinflusst werden.

Die Drehrichtungen 106, 206 der ersten Walze 101 und der zweiten Walze 201 der Pulvermühle 210 sind hier so eingestellt, dass eine Bewegungsrichtung der dem ersten Spalt 102 zugewandten Oberflächen der beiden Walzen 101, 201 mit einer Zuführungsrichtung des Trockenpulvers 205, hier von oben nach unten, gleichgerichtet ist. Weiterhin sind auch die Drehrichtungen 306, 406, 506, 606 der Walzen 301, 401, 501, 601 der Walzenanordnung 220 gezeigt. Dabei ist die Drehrichtung 406, 506, 606 einer nachfolgenden Walze 401, 501, 601 immer entgegengesetzt zu einer Drehrichtung 306, 406, 506 einer vorgehenden Walze 301, 401, 501.

Weiterhin kann eine Rotationsgeschwindigkeit einer nachfolgenden Walze 401, 501, 601 größer als eine Rotationsgeschwindigkeit einer vorgelagerten Walze 301, 401, 501 sein.

Die unterschiedlichen Rotationsgeschwindigkeiten können für eine Scherung innerhalb des Trockenfilms 203 sorgen und/oder können Kräfte erzeugen, die die Haftung des Trockenfilms 203 an der nachfolgenden Walze 401, 501, 601 verbessern. Dadurch kann der Trockenfilm 203 auf der nachfolgenden Walze 401, 501, 601 weitertransportiert werden und es ist nicht erforderlich, dass der Trockenfilm 203 ab der Walze 301 freitragend oder selbsttragend ist.

In dem Spalt 502 zwischen den letzten Walzen 501, 601 kann der Trockenfilm 203 auf ein Substrat 209, hier eine Trägerfolie, auflaminiert werden, um beispielsweise eine Elektrode zu erhalten. Hierzu kann die Vorrichtung 200 eine Bereitstellungseinheit der Trägerfolie 209 aufweisen, wobei die Bereitstellungseinheit ausgebildet ist, die Trägerfolie 209 dem letzten Walzenspalt 502 der Walzenanordnung 220 zuzuführen. Der letzte Walzenspalt 502 der Walzenanordnung 220 ist ausgebildet, die Trägerfolie 209 aufzunehmen und den Trockenfilm 203 auf die Trägerfolie 209 aufzubringen.

Die in den Figuren 2 und 3 gezeigte Vorrichtung 200 ist somit geeignet ein Verfahren zur Herstellung des Trockenfilms 203 mit den folgenden Schritten auszuführen:
- Bereitstellen eines Trockenpulvers 205 und
- Verarbeiten des Trockenpulvers 205 in der Vorrichtung 200 zu dem Trockenfilm 203.

In alternativen Ausführungsbeispielen kann der erste oder der zweite Körper der Pulvermühle 210 auch als ein feststehender Körper ausgeführt sein. Durch den relativen Geschwindigkeitsunterschied zwischen dem zumindest einen rotierenden Körper 101, 201 und dem feststehenden Körper ermöglicht die Vorrichtung 100 dann weiterhin das Verarbeiten des Trockenpulvers 205 zu dem Trockenfilm 203 in dem ersten Spalt 102. Denn der grundlegende Mechanismus für die Trockenfilmbildung ist die Friktion eines Materials zwischen zwei Oberflächen, mit dem relativen Geschwindigkeitsunterschied als wesentlichem Einflussfaktor. Gegenüber den in den Figuren 2 und 3 gezeigten Vorrichtungen kann eine Ausführung mit einem feststehenden Körper einen technischen Aufwand reduzieren. Denn gegenüber einer Walze entfällt eine Lagerung oder wird vereinfacht und auch ein Antrieb ist nicht erforderlich.

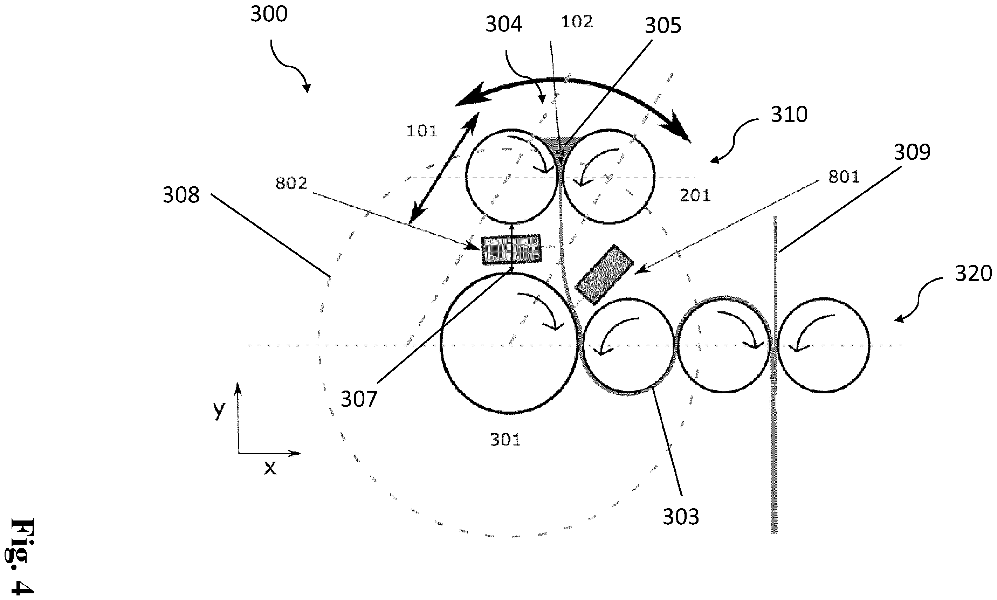

Figur 4 zeigt eine Vorrichtung 300, bei der eine Pulvermühle 310 gegenüber einer Walzenanordnung 320 translatorisch und rotatorisch verstellbar ist. Die rotatorische Verstellung erfolgt dabei auf einer zu einer ersten Walze 301 der Walzenanordnung 320 konzentrischen Kreisbahn 308. Die translatorische Verstellung kann in x- und/oder y-Richtung erfolgen. Ein Verstellen in x-Richtung ermöglicht ein Ändern des Kontaktpunkts zwischen Trockenfilm 303 und erster Walze 301, ein Verstellen in y-Richtung erlaubt hingegen ein Anpassen eines Abstands zwischen Pulvermühle 310 und Walzenanordnung 320.

Durch die rotatorische Verstellung, beispielsweise durch Verschwenken, der Pulvermühle 310 gegenüber der Walzenanordnung 320 kann eine Länge des Trockenfilms 303 zwischen dem ersten Spalt 102 und dem Kontaktpunkt auf der Walze 301 auch bei einer gleichzeitigen, translatorischen Bewegung der Pulvermühle 310 konstant gehalten oder bedarfsgerecht variiert werden. Dies hat den Vorteil, dass die Länge an Eigenschaften des Trockenfilms 303, wie beispielsweise eine Festigkeit, angepasst werden kann, so dass ein mögliches Zerreißen vermieden oder eine Wahrscheinlichkeit für eine Zerreißen zumindest reduziert werden kann.

Der Durchmesser der Walze 301 ist hier gegenüber den Durchmessern der anderen Walzen 101, 201, 401, 501, 601 vergrößert. Dadurch lässt sich bei gleicher Oberflächengeschwindigkeit die Verweilzeit des Trockenfilms 303 auf der ersten Walze 301 verlängern. Somit bietet die Vorrichtung 300 eine zusätzliche Möglichkeit, den Wärmeeintrag von der Walze 301 in den Trockenfilm 303 anzupassen.

Die Vorrichtung 300 weist zudem einen Temperatursensor 801 in einem Bereich zwischen der Pulvermühle 310 und der Walzenanordnung 320 auf, hier in einem Bereich unmittelbar vor der Walzenanordnung 320. Dieser ist ausgebildet, eine Temperatur des Trockenfilms 303 zu erfassen und ermöglicht es so, die Verweilzeit des Trockenfilms 303 auf der Walze 301 basierend auf der erfassten Temperatur zu steuern. Damit lässt sich nahezu in Echtzeit die Temperatur des Trockenfilms 303 einstellen oder korrigieren, ohne eine Walzentemperatur zu verändern.

Weiterhin umfasst die Vorrichtung 300 einen weiteren Sensor 802 zur Detektion von Agglomeraten, harten Fremdpartikeln oder Pulververhärtungen. Diese Partikel oder Agglomerate können zu einer Beschädigung der Walzenanordnung 320 führen und sind in einem, beispielsweise auf einer Walze 101, 201, 301, 401, 501, 601 anliegenden Trockenfilm 303 nicht zu detektieren. Messungen am freitragenden Trockenfilm 303 im Bereich zwischen der Pulvermühle 310 und der Walzenanordnung 320 ermöglichen es hingegen, diese Partikel oder Agglomerate zu erkennen. Bei Detektion eines solchen Defekts kann die Walzenanordnung 320 gestoppt werden oder zumindest einer der Walzenspalte der Walzenanordnung 320 geöffnet werden. Damit lassen sich Walzenbeschädigungen und kostspielige Walzenwechsel vermeiden.

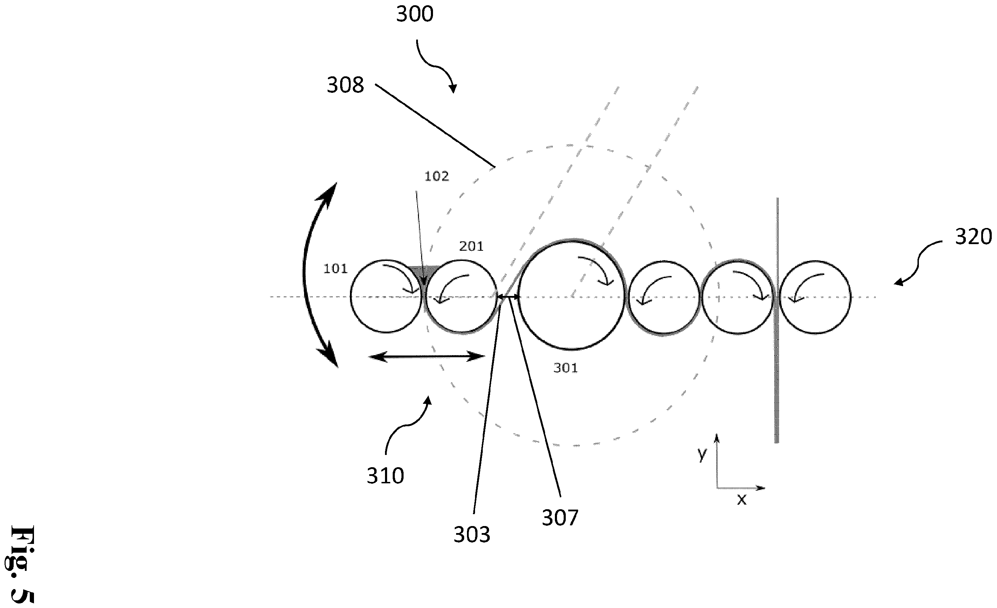

Die in Fig. 5 dargestellte Vorrichtung 300 zeigt einen weiteren Vorteil der rotatorischen und translatorischen Verstellbarkeit der Pulvermühle 310 gegenüber der Walzenanordnung 320. Bei einer rotatorischen Bewegung der Pulvermühle 310 um die Walze 301 lassen sich sehr hohe Umschlingungsraten des Trockenfilms 303 um die Walze 201 und/oder die Walze 301 erreichen. Damit kann eine maximale Temperierung und Wärmeübertragung erreicht werden, indem eine Wärmeübertragung von der Walze 201 der Pulvermühle 210 und von der Walze 301 der Walzenanordnung an den Trockenfilm 303 genutzt werden kann. In der hier gezeigten Ausführungsformen werden Umschlingungsraten von knapp 50 % erreicht, es sind damit aber Umschlingungen von beispielsweise mehr als 75% um Walze 301 möglich.

In weiteren, hier nicht gezeigten Ausführungsbeispielen kann vorgesehen sein, dass die Pulvermühle 210, 310 und die Walzenanordnung 220, 320 unabhängig voneinander temperierbar sind. Weiterhin kann der erste Körper 101 und/oder der zweite Körper 102 der Pulvermühle 210, 310 und/oder die zumindest eine Walze 301 der Walzenanordnung 220, 320 verstellbar ausgeführt sein. Auch kann eine Rotationsgeschwindigkeit des zumindest einen rotierenden Körpers 101, 201 der Pulvermühle 210, 310 und/oder eine Rotationsgeschwindigkeit der zumindest einen Walze 301 der Walzenanordnung 220, 320 einstellbar sein.

Insbesondere kann die Vorrichtung 200, 300 ein Steuergerät umfassen, das ausgebildet und eingerichtet ist, eine Rotationsgeschwindigkeit des zumindest einen rotierenden Körpers 101, 201 der Pulvermühle 210, 310 und/oder der zumindest einen Walze 301 der Walzenanordnung 220, 320 einzustellen, eine Temperatur des ersten Körpers 101 und/oder des zweiten Körpers 201 der Pulvermühle 210, 310 und/oder der zumindest einen Walze 301 der Walzenanordnung 220, 320 einzustellen und/oder die Pulvermühle 210, 310 gegenüber der Walzenordnung 220, 320, den ersten Körper 101 und/oder den zweiten Körper 201 der Pulvermühle 210, 310 und/oder die zumindest eine Walze 301 der Walzenanordnung 220, 320 zu verstellen.

Bevorzugt kann das Steuergerät dieses Einstellen oder Verstellen basierend auf einer vom Sensor 801, 802 erfassten Temperatur, Güte und/oder Dicke des Trockenfilms 203, 303 durchführen. Ein solches Steuergerät ist beispielsweise in der Lage ein Verfahren durchzuführen, das auch ein Verstellen der Pulvermühle 210, 310 gegenüber der Walzenanordnung 220, 320 basierend auf einer erfassten Temperatur, Güte und/oder Dicke des Trockenfilms 203, 303 umfasst. Dadurch ermöglicht die Erfindung ein automatisiertes Anpassen der Herstellung des Trockenfilms 203, 303 im laufenden Betrieb.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 100, 200, 300: Vorrichtung zum Herstellen eines Trockenfilms
- 101: Erste Walze
- 102: Erster Spalt
- 106: Drehrichtung erste Walze
- 201: Zweite Walze
- 202: Zweiter Spalt
- 103, 203, 303: Trockenfilm
- 104, 204, 304: Zuführung
- 105, 205, 305: Trockenpulver
- 206: Drehrichtung zweite Walze
- 207, 307: Abstand zwischen Pulvermühle und Walzenanordnung
- 209, 309: Substrat
- 210, 310: Pulvermühle
- 220, 320: Walzenanordnung
- 301: Dritte Walze
- 302: Dritter Spalt
- 306: Drehrichtung dritte Walze
- 308: Konzentrische Kreisbahn
- 401: Vierte Walze
- 406: Drehrichtung vierte Walze
- 501: Fünfte Walze
- 506: Drehrichtung fünfte Walze
- 502: Fünfter Spalt
- 601: Sechste Walze
- 606: Drehrichtung sechste Walze
- 701: Aufwickler
- 801: Temperatursensor
- 802: Weiterer Sensor

## Patentansprüche

1. Vorrichtung (200, 300) zum Herstellen eines Trockenfilms (203, 303), vorzugsweise zum Beschichten eines Substrats, insbesondere eines Stromkollektors, umfassend:
- eine Zuführung (204, 304) von Trockenpulver (205, 305),
- eine Pulvermühle (210, 310) aufweisend einen ersten Körper (101) und einen zweiten Körper (201), die so angeordnet sind, dass sie einen ersten Spalt (102) zwischen dem ersten Körper (101) und dem zweiten Körper (201) bereitstellen, wobei zumindest der erste Körper (101) oder der zweite Körper (101) als ein rotierender Körper ausgeführt ist und wobei der erste Spalt (102) ausgebildet ist, das Trockenpulver (205, 305) von der Zuführung (204, 304) aufzunehmen und zu einem Trockenfilm (203, 303) zu verarbeiten, und
- eine Walzenanordnung (220, 320), aufweisend zumindest eine Walze (301), wobei die Walzenanordnung (220, 320) ausgebildet ist, den Trockenfilm (203, 303) von der Pulvermühle (210, 310) aufzunehmen,
**dadurch gekennzeichnet, dass** die Pulvermühle (210, 310) und die Walzenanordnung (220, 320) voneinander entkoppelt, vorzugsweise mechanisch und/oder thermisch entkoppelt, angeordnet sind.

2. Vorrichtung (200, 300) nach Anspruch 1, bei der
(i) die Pulvermühle (210, 310) und die Walzenanordnung (220, 320) voneinander beabstandet angeordnet sind, wobei optional ein Abstand (207, 307) zwischen der Pulvermühle (210, 310) und der Walzenanordnung (220, 320) zumindest das Zweifache des ersten Spalts (102) beträgt, bevorzugt zumindest das Dreifache, besonders bevorzugt zumindest das Fünffache,
(ii) die Pulvermühle (210, 310) und die Walzenanordnung (220, 320) unabhängige Aufhängungen aufweisen, und/oder
(iii) die Pulvermühle (210, 310) über der Walzenanordnung (220, 320) angeordnet ist.

3. Vorrichtung (200, 300) nach einem der vorherigen Ansprüche, bei der
(i) die Pulvermühle (210, 310) gegenüber der Walzenanordnung (220, 320) verstellbar ausgeführt ist, wobei optional die Pulvermühle (210, 310) gegenüber der Walzenanordnung (220, 320) translatorisch verstellbar ausgeführt ist, wobei optional die Pulvermühle (210, 310) so gegenüber der Walzenanordnung (220, 320) translatorisch verstellbar ausgeführt ist, dass eine Position, an der der Trockenfilm (203, 303) die Walzenanordnung (220, 320) kontaktiert, einstellbar ist,
(ii) die Pulvermühle (210, 310) gegenüber der Walzenanordnung (220, 320) rotatorisch verstellbar ist, wobei optional die Pulvermühle (210, 310) auf einer zu der zumindest einen Walze (301) der Walzenanordnung (220, 320) konzentrischen Kreisbahn (308) rotatorisch verstellbar ist, und/oder
(iii) die Pulvermühle (210, 310) gegenüber der Walzenanordnung (220, 320) so verstellbar ist, dass eine maximale Umschlingungsrate des Trockenfilms (203, 303) um den zumindest einen rotierenden Körper (101, 201) der Pulvermühle (210, 310) und/oder die zumindest eine Walze (301) der Walzenanordnung (210, 310) mehr als 10 %, bevorzugt mehr als 25 %, besonders bevorzugt mehr als 50 % beträgt.

4. Vorrichtung (200, 300) nach einem der vorherigen Ansprüche, bei der
(a) der erste Körper (101) oder der zweite Körper (201) der Pulvermühle (210, 310) als ein feststehender Körper ausgeführt ist, wobei optional ein Profil einer dem ersten Spalt (102) zugewandten Oberfläche des feststehenden Körpers zumindest bereichsweise veränderbar ist, und/oder
(b) der erste Körper (101) und/oder der zweite Körper (201) der Pulvermühle (210, 310) als ein Band ausgeführt ist.

5. Vorrichtung (200, 300) nach einem der Ansprüche 1 bis 3, bei der der erste Körper (101) und der zweite Körper (201) der Pulvermühle (210, 310) als Walzen (101, 201) ausgeführt sind.

6. Vorrichtung (200, 300) nach einem der vorherigen Ansprüche, bei der
(i) der Trockenfilm (203, 303) vor der Aufnahme durch die Walzenanordnung (220, 320) freitragend ist,
(ii) die Pulvermühle (210, 310) und die Walzenanordnung (220, 320) unabhängig voneinander temperierbar sind,
(iii) der erste Körper (101) und/oder der zweite Körper (102) der Pulvermühle (210, 310) und/oder die zumindest eine Walze (301) der Walzenanordnung (220, 320) verstellbar ausgeführt sind, und/oder
(iv) eine Rotationsgeschwindigkeit des zumindest einen rotierenden Körpers (101, 201) der Pulvermühle (210, 310) und/oder eine Rotationsgeschwindigkeit der zumindest einen Walze (301) der Walzenanordnung (220, 320) einstellbar ist.

7. Vorrichtung (200, 300) nach einem der vorherigen Ansprüche, aufweisend
(a) zumindest einen Temperatursensor (801), der ausgebildet ist, eine Temperatur des Trockenfilms (203, 303) zu erfassen, bevorzugt in einem Bereich zwischen der Pulvermühle (210, 310) und der Walzenanordnung (220, 320), bevorzugt in einem Bereich unmittelbar vor der Walzenanordnung (220, 320) und/oder
(b) zumindest einen Sensor (802) zum Erfassen einer Güte und/oder einer Dicke des Trockenfilms (203, 303), vorzugsweise in einem Bereich zwischen der Pulvermühle (210, 310) und der Walzenanordnung (220, 320).

8. Vorrichtung (200, 300) nach einem der vorherigen Ansprüche, bei der die Walzenanordnung (220, 320) zumindest eine weitere, nachgelagerte Walze (401) umfasst und die zumindest zwei Walzen (301, 401) so angeordnet sind, dass sie einen ersten Walzenspalt (302) der Walzenanordnung (220, 320) zwischen den zumindest zwei Walzen (301, 401) bereitstellen, wobei der erste Walzenspalt (302) der Walzenanordnung (220, 320) ausgebildet ist, den Trockenfilm (203, 303) von der vorgelagerten Walze (301) der Walzenanordnung (220, 320) aufzunehmen, wobei optional
(i) ein Durchmesser der vorgelagerten Walze (301) der Walzenanordnung (220, 320) größer ist als ein Durchmesser der nachgelagerten Walze (401) und/oder
(ii) die Vorrichtung ferner aufweist eine Bereitstellungseinheit eines Substrats (209, 309), vorzugsweise eines Stromkollektors, wobei die Bereitstellungseinheit ausgebildet ist, das Substrat (309, 409) dem ersten Walzenspalt (302) oder einem weiteren Walzenspalt (402, 502) der Walzenanordnung (220, 320) zuzuführen, und wobei der erste oder der weitere Walzenspalt (302, 402, 502) der Walzenanordnung (220, 320) ausgebildet ist, das Substrat (209, 309) aufzunehmen und den Trockenfilm (203, 303) auf das Substrat (209, 309) aufzubringen.

9. Vorrichtung (200, 300) nach einem der vorherigen Ansprüche, bei der das Trockenpulver (205, 305) ein Aktivmaterial, ein Leitadditiv und/oder einen geeigneten Binder umfasst.

10. Vorrichtung (200, 300) nach einem der vorherigen Ansprüche, umfassend
(a) ein Steuergerät, das ausgebildet und eingerichtet ist, eine Rotationsgeschwindigkeit des zumindest einen rotierenden Körpers (101, 201) der Pulvermühle (210, 310) und/oder der zumindest einen Walze (301) der Walzenanordnung (220, 320) einzustellen,
(b) ein Steuergerät, das ausgebildet und eingerichtet ist, eine Temperatur des ersten Körpers (101) und/oder des zweiten Körpers (201) der Pulvermühle (210, 310) und/oder der zumindest einen Walze (301) der Walzenanordnung (220, 320) einzustellen, und/oder
(c) ein Steuergerät, das ausgebildet und eingerichtet ist, die Pulvermühle (210, 310) gegenüber der Walzenordnung (220, 320), den ersten Körper (101) und/oder den zweiten Körper (201) der Pulvermühle (210, 310) und/oder die zumindest eine Walze (301) der Walzenanordnung (220, 320) zu verstellen.

11. Vorrichtung (200, 300) nach einem der vorherigen Ansprüche in Verbindung mit Anspruch 7, umfassend ein Steuergerät, das ausgebildet und eingerichtet ist, die erfasste Temperatur, Güte und/oder Dicke des Trockenfilms (203, 303) von dem Sensor (801, 802) zu erhalten und basierend auf der erhaltenen Temperatur, Güte und/oder Dicke eine Rotationsgeschwindigkeit des zumindest einen rotierenden Körpers (101, 201) der Pulvermühle (210, 310) und/oder der zumindest einen Walze (301) der Walzenanordnung (220, 320) einzustellen, eine Temperatur des ersten Körpers (101) und/oder des zweiten Körpers (201) der Pulvermühle (210, 310) und/oder der zumindest einen Walze (301) der Walzenanordnung (220, 320) einzustellen und/oder die Pulvermühle (210, 310) gegenüber der Walzenordnung (220, 320), den ersten Körper (101) und/oder den zweiten Körper (201) der Pulvermühle (210, 310) und/oder die zumindest eine Walze (301) der Walzenanordnung (220, 320) zu verstellen.

12. Verfahren zum Herstellen eines Trockenfilms (203, 303), vorzugsweise zum Beschichten eines Substrats (209, 309), insbesondere eines Stromkollektors, bei dem ein Trockenpulver (205, 305) durch eine Vorrichtung aufweisend eine Pulvermühle und eine Walzenanordnung, vorzugsweise durch eine Vorrichtung (200, 300) nach einem der Ansprüche 1 bis 29, zu dem Trockenfilm (203, 303) verarbeitet wird, aufweisend die Schritte:
- Bereitstellen eines Trockenpulvers (205, 305), und
- Verarbeiten des Trockenpulvers (205, 305) in der Vorrichtung (200, 300) zu dem Trockenfilm (203, 303),
wobei die Pulvermühle (210, 310) und die Walzenanordnung (220, 320) voneinander entkoppelt, vorzugsweise mechanisch und/oder thermisch entkoppelt, angeordnet sind.

13. Verfahren nach Anspruch 12, das
(i) zusätzliche die folgenden Schritte umfasst:
- Bereitstellen eines Substrats (209, 309) und
- Aufbringen des Trockenfilms (203, 303) auf das Substrat (209, 309),
(ii) in einem weiteren Schritt ein Verstellen der Pulvermühle (210, 310) gegenüber der Walzenanordnung (220, 320) umfasst, wobei optional der Schritt des Verstellens basierend auf einer erfassten Temperatur, Güte und/oder Dicke des Trockenfilms (203, 303) erfolgt, und/oder
(iii) zusätzlich die folgenden Schritte umfasst:
- Erfassen einer Güte des Trockenfilms (203, 303),
- Wenn das Erfassen der Güte einen Defekt im Trockenfilm (203, 303) detektiert, Verstellen zumindest einer Walze (301, 401, 501, 601) der Walzenanordnung (220, 320) und/oder Unterbrechen des Verfahrens.

14. Trockenfilm (203, 303), der durch eine Vorrichtung (200, 300) nach einem der Ansprüche 1 bis 11 bereitgestellt oder durch ein Verfahren nach einem der Ansprüche 12 bis 13 hergestellt ist.

15. Substrat (209, 309), vorzugsweise ein Stromkollektor, mit einem Trockenfilm (203, 303) nach Anspruch 14.

16. Energiespeicher- oder Energiewandlersystem, das einen Trockenfilm (203, 303) nach Anspruch 15 oder ein Substrat (209, 309) nach Anspruch 15 aufweist.
